# EUROPEAN PATENT APPLICATION

(11) **EP 2 282 246 A2**
(43) Date of publication of application: **09.02.2011**
(21) Application number: 10170844.4
(22) Date of filing: 27.07.2010
(51) Int. Cl.: G05B 19/409

(54) **Apparatus for controlling a machine tool**

(30) Priority: 03.08.2009 DE 102009037165
(71) Applicant: STAMA Maschinenfabrik GmbH, 73278 Schlierbach (DE)
(72) Inventor: Feinauer, Achim, 73033, Göppingen (DE); Bräuning, Uwe, 72762 Reutlingen (DE); Schwarz, Matthias, 73326, Deggingen (DE)
(74) Representative: Witte, Weller & Partner

(57) **Abstract**

An apparatus (21) on a machine tool (10) for machining workpieces (12), preferably for machining workpieces by removing material, is provided to control functions of the machine tool (10) and to program and/or test the machining of workpieces (12) and/or to test the machine tool (10) itself. The apparatus is provided with at least one display unit (22) and at least one input unit (23), whereby masks for displaying and/or for inputting, via the input unit (23), machine and/or control parameters are displayable on the display unit (22). A start matrix having a grid of fields, which are stored in a geometrically addressable manner and are preferably arranged in rows and columns, can be displayed on the display unit (22), the input unit (23) which is separate from the display unit (22) being able to be used to select each field via its geometrical position in the grid at which it is displayed on the display unit (22), and the assigned function being able to be immediately triggered or a mask being able to be immediately displayed on the display unit (22) by activating a field (Fig. 1).

## Description

The present invention relates to an apparatus on a machine tool for machining workpieces, preferably for machining workpieces by removing material, the apparatus being provided to control functions of the machine tool and to program and/or test the machining of workpieces and/or to test the machine tool itself, the apparatus having at least one display unit and at least one input unit, whereby masks for displaying and/or for inputting, via the input unit, machine and/or control parameters are displayable on the display unit.

Such apparatuses and machine tools are widely known from the prior art.

EP 1 460 499 A1 discloses such an apparatus for controlling a pipe bending machine, in which apparatus the display unit and the input unit are formed by a touchscreen which allows navigation through the various masks which are called windows therein. The masks may be pure display masks or may contain input fields to which the user can input data and instructions.

The touchscreen is subdivided into two regions. The first region permanently displays a vertical menu bar which can be used to call up different windows which are displayed in the second region of the touchscreen. In accordance with Windows technology, individual windows are provided with horizontal tab menu bars which can be used to select further subwindows.

In order to increase reliability, the possibility of navigating using a keyboard and a mouse pointer is provided.

The touchscreen is organized in an activity-oriented manner, that is to say that information and those functions which are relevant to performing the current task and are oriented to the workflow are displayed.

These current tasks and workflows include, for example, production, programming, setting up, maintenance, activation and diagnosis.

A so-called action button whose operation triggers or terminates a selected function is displayed on the touchscreen in particular masks or windows.

In a comparable manner, EP 0 858 016 B1 describes a numerical controller with an operator interface using Windows technology, in which rows of soft keys which provide an input option adapted to the current task are provided.

DE 195 15 198 A1 describes a numerical controller for a machine tool, which can be programmed using Windows technology, menu bars and command buttons.

The known controller has a display unit and an input unit which comprises keypads whose individual keys are coupled to specific functions. Furthermore, keys which can be assigned different functions via an application-specific menu of so-called soft keys, which are displayed on the display unit in spatial correspondence to said keys, are directly arranged on the periphery of the display unit.

In this manner, the harsh industrial operating environment which does not allow the use of the keyboard and mouse which are conventional in office computers shall be taken into account. Furthermore, it shall be possible to use a limited number of keys to control an arbitrarily large number of menu items or command buttons.

A stepping key and a return key are provided for this purpose. Operation of the stepping key causes progression to further menu items, whereas operation of the return key closes a menu which has been called up.

EP 0 378 649 B1 discloses an apparatus for inputting data and programming instructions to a CNC machine tool. The apparatus comprises a screen on which the data and programming instructions are input via a keyboard with the aid of a pointer or cursor in the interactive mode. In this case, the cursor is moved over a contact array which can be operated with the finger and is different from the screen.

A hierarchical operating structure which is often several levels deep is used in these apparatuses and apparatuses of the generic type which are also known. In order to trigger a particular function, for example in order to change a particular tool from the tool magazine into the work spindle and then to follow therewith a particular movement path in the test mode, it is necessary to navigate through a large number of submenus or subwindows.

On the other hand, it is known practice to allocate particular functions to permanently fixed keys, such as door locking, starting etc.

Furthermore, many other functions are assigned to soft keys which are assigned different functions in different interleaved masks.

Different functions from the soft key bars are used depending on the user and current task, as for example setting up, test mode, workpiece machining, maintenance etc., the depth and complexity of the interleaving being felt to be disadvantageous, in particular.

In view of the above, it is an object of the present invention to provide an apparatus of the type mentioned at the outset which can also be operated in a reliable, fast and simple manner in the harsh operating environment of machine tools for machining workpieces by removing material.

In the case of an apparatus of the type mentioned at the outset, this object is achieved by the fact that a start matrix having a grid of fields, which are stored in a geometrically addressable manner, can be displayed on the display unit, that the input unit which is separate from the display unit can be used to select each field via its geometrical position in the grid at which it is displayed on the display unit, and that the assigned function can be immediately triggered or a mask can be immediately displayed on the display unit by activating a field.

According to the invention, a grid of fields is thus displayed in the start matrix, whereby each individual field can selected via its geometrical position, that is to say its position in the grid.

Within the scope of the present invention, the expressions "stored in a geometrically addressable manner" and "geometrical position in the grid" are understood as meaning such a unique arrangement of fields in a grid that the position of the fields can be easily identified and each individual field can be selected by means of simple geometrical measures. This makes it possible to quickly select a field using simple mechanical measures.

The fields may thus be arranged, for example, in circles, spirals or meanders, whereby the selection can be made by using one or more turn and push switches. In this case, a marker is moved "in a circle" by turning the switch, as a result of which the individual fields are "moved through" until the desired field has been selected. The selected field can then be activated by pushing the turn and push switch. This is a way of selecting and activating a field which can be controlled in a very simple manner and can be grasped in an intuitively rapid manner.

In this case, particular functions such as RINSE CHAIN, START RINSING CYCLE, START ANALYSIS PROGRAM etc. are directly allocated to individual fields, whereas the activation of other fields results in input or display masks being called up, from which other masks can be called up if necessary.

In this case, it is advantageous that a very large number of differently programmed fields are present in a parallel manner in the start matrix, with the result that for many applications all required functions and masks are directly available via the displayed fields.

In this case, the display unit is not in the form of a touchscreen. This has the advantage that no errors or problems occur when operating the new apparatus since a touchscreen cannot be reliably operated in the harsh operating environment; in addition, said touchscreen is susceptible to faults if it is operated, for example, with oily or greasy fingers, which cannot be avoided in this environment.

Rather, the individual fields are selected using the separate input unit which contains one or more turn and push switches and/or keys which can be quickly operated in a reliable manner and without susceptibility to faults even with oily fingers.

If more functions and masks are required than fields can be made available in the start matrix, a certain but very small interleaving depth in comparison with the known apparatuses may be required.

Operating the novel apparatus is therefore greatly simplified in comparison with the known apparatuses but a great degree of flexibility is nevertheless provided since the fields can be differently assigned direct functions or masks and can therefore be assigned in a user-specific manner depending on the current task and actual workflow.

Each operator can therefore create his own "interface", that is to say his own start matrix, as also explained further below.

The object underlying the invention is therefore fully achieved.

In this case, it is particularly preferred if the fields in the grid are arranged in rows and columns, and if each field can be selected via the row and the column in which it is displayed on the display unit.

It is advantageous here that the individual fields can be assigned and selected in a particularly simple manner.

A total of 64 fields can thus be simultaneously offered for selection, for example in eight rows and eight columns, on a conventional screen.

Input can be effected in this case using a key block in which the keys are likewise arranged in rows and columns, with the result that each field is assigned a key whose activation immediately results in the field in question being activated.

At the same time, the number of individual keys is limited, with the result that operation is clear.

In one embodiment of the invention, the input unit has at least two keypads, a first keypad of which is intended to select a column and a second keypad of which is intended to select a row.

It is advantageous here that the number of keys is reduced further; only two times eight, that is to say 16 keys, are thus needed to select 64 fields. The two keypads can be operated with two hands in this case, pushing a respective key in each one of the two keypads thus selects the field which has been defined in this manner and simultaneously may activate this field.

In this case, it is preferred if the first keypad comprises a linear arrangement of keys which are preferably arranged parallel to the displayed rows, the number of keys in the first keypad corresponding at least to the number of columns which can be displayed on the display unit, and if the second keypad also preferably comprises a linear arrangement of keys which are preferably arranged parallel to the displayed columns, the number of keys in the second keypad corresponding at least to the number of rows which can be displayed on the display unit.

In this arrangement, it is advantageous that the keys and fields are assigned in such a manner that it is possible to quickly select a field.

It is also preferred if the display unit comprises a screen for displaying the start matrix, and if the two keypads are arranged transversely with respect to one another in a manner adjoining the screen in such a way that the keys are geometrically assigned to the fields displayed in the start matrix.

It is advantageous here that the assignment between keys and fields is intuitively grasped, which makes rapid and reliable operation possible. Since the two keypads are now very close together, operation with one hand is also possible. For example, a key in the first keypad can be operated with the thumb and a key in the second keypad can be operated with the index finger.

On the other hand, it is preferred if the apparatus comprises a timer function which activates a field when its column and row have been selected within a settable period of time.

In this embodiment, it is advantageous that operation is even simpler. The operator must only use one hand to push one key in each of the first and second keypads in succession within the set period of time in order to start the function assigned to the field or to call up the assigned mask.

In another embodiment, it is preferred if a marker can be displayed on the display unit, and if the input unit has at least one switch arrangement which can be used to position the marker on a field to be selected.

This is an alternative operating option which uses the advantages of cursor control. The switch arrangement may be, for example, in the form of a turn and push switch or in the form of a field comprising four arrow keys.

The marker may be displayed in the form of a pointer but may also be in the form of a frame or another geometrical shape or may highlight the field, over which it is respectively positioned, in another manner, for example by means of inversion or colouring.

Overall, it is preferred if the input unit has at least one activation key whose operation can activate a selected field, the input unit preferably having at least one return key whose operation can activate the start matrix.

It is advantageous here that inadvertent triggering of a field is avoided, which increases the operating reliability both during cursor control and during control via two linear keypads.

The return key has the advantage that a mask which has been called up can be left at any time using a separate key. This increases the operating speed and simplifies operation at the same time since it is not necessary to look for the button for leaving the mask in each mask.

It is also preferred if the apparatus has a connection for a storage medium on which a start matrix with assigned fields and masks is stored.

It is advantageous here that a user can use a start matrix programmed by him in different machine tools without having to freshly set up the assignment of the functions and masks to the individual fields, that is to say the links and function allocations, on each machine tool. This is particularly important for service personnel. In addition, this increases the operating reliability since a start matrix which has been recognized as correctly programmed once is now used again and again.

Finally, it is preferred if fixed functions or masks are assigned to some of the fields; functions or masks are also preferably assigned to some of the fields in a user-defined manner and functions or masks are preferably dynamically assigned to some of the fields.

These measures allow very flexible adaptation of the start matrix to the current task and the respective operator. The assignment of the individual fields to the functions and masks is freely programmable, on the one hand, but fixed functions or masks which are always required are nevertheless assigned to some fields.

Other fields can be assigned, in a user-defined manner, those functions or masks which are needed by the user to perform the current task or which the user wishes to quickly access again and again on the basis of personal preferences.

Functions or masks can also be dynamically assigned to some of the fields by the software of the apparatus. In this case, particular fields are assigned those functions or masks which can be directly called up and for which the software determines that they are frequently used by the user currently operating the apparatus.

This is a type of teach-in function; the start mask thereby partially programs itself depending on the personal preferences of the user in such a manner that it facilitates the work for the user without the latter having to make this assignment himself.

Operation is simplified further if the function or mask assigned to the fields is explained in at least some of the fields.

In view of the above, the present invention also relates to a machine tool for machining workpieces, preferably for machining workpieces by removing material, which machine tool is provided with the novel apparatus.

Further features and advantages emerge from the accompanying drawing and the following description of the preferred embodiment.

It goes without saying that the features mentioned above and the features still to be explained below can be used not only in the respectively specified combination but also in other combinations or alone without departing from the scope of the present invention.

Embodiments of the invention are illustrated in the drawing and are explained in more detail in the following description. In the drawing:
- Fig. 1: shows a simplified schematic illustration of a machine tool on which the novel apparatus is provided;
- Fig. 2: shows a schematic illustration of a first embodiment of the novel appara- tus from Fig. 1;
- Fig. 3: shows a schematic illustration of a second embodiment of the novel apparatus from Fig. 1;
- Fig. 4: shows an output mask used in the novel apparatus from Fig. 1; and
- Fig. 5: shows an input mask used in the novel apparatus from Fig. 1.

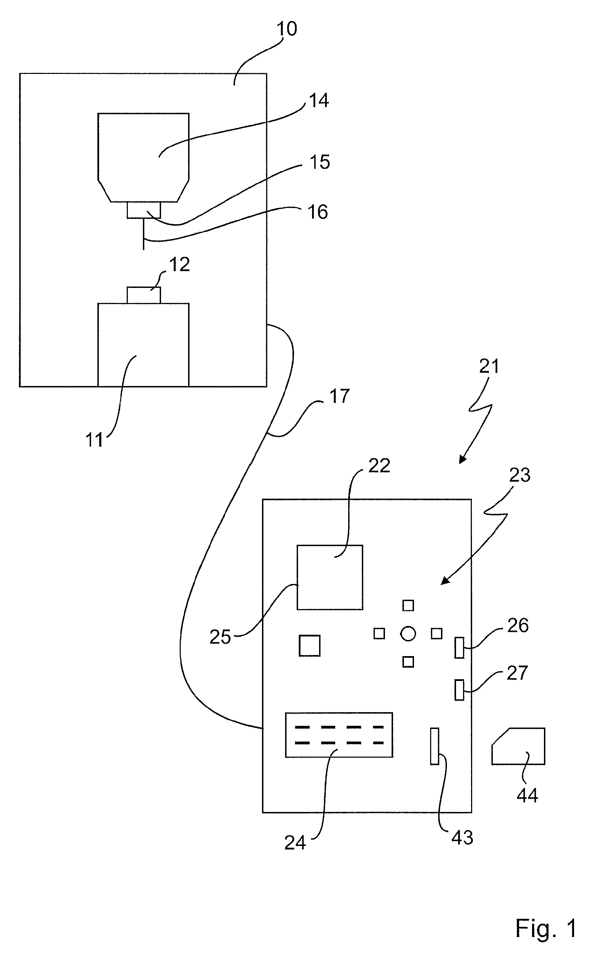

In Fig. 1, numeral 10 is used to denote a schematically illustrated machine tool which is a moving column machine in the present case. The machine tool 10 comprises a workpiece table 11 on which a workpiece 12 to be machined is arranged.

A spindle head 14 in which a work spindle 15 is mounted in a rotationally driven manner is indicated above the workpiece table 11. The work spindle 15 carries a tool 16 which is used to machine the workpiece 12.

The spindle head 14 and the workpiece table 11 can be moved in the three spatial axes relative to one another in the conventional manner, the workpiece table 11 being fixed and all three axes thus being combined in the tool 16 in the case of a moving column machine. Rotational axes, such as rotation and pivot axes, may also be provided in order to enable rotary machining of the workpieces 12 and/or the machining of the fifth and sixth sides, as is known as such from many applications by the present applicant.

It goes without saying that the invention is not restricted to a machine tool 10 of the moving column type or to those machine tools which have a single spindle head 14. The invention can also be used in machine tools of any desired design with one spindle head 14 or a plurality of spindle heads 14, respectively with one work spindle 15 or a plurality of work spindles 15 and, if appropriate, with a plurality of workpiece tables 11.

In order to control the individual components of the machine tool 10, they are connected, for example via cables 17, to an apparatus 21 which is provided for control in or on the machine tool 10. The apparatus 21 is used to control different functions of the machine tool, such as the starting and stopping of workpiece machining, the opening and closing of a loading door (not illustrated), the changing of a tool or workpiece, the rinsing of the tool magazine (not illustrated), test runs etc.

The apparatus 21 is also used for programming the machining of workpieces 12, whereby the tools to be used in each case and the operations to be carried out by the tools are predefined in connection with this programming.

The controller is also used to test the programmed machining of workpieces, for which purpose the programmed sequence of individual instructions is carried out during single block operation, for example.

Finally, the apparatus 21 is also used to test the machine tool 10 itself and to carry out maintenance and servicing work.

These tasks of the apparatus 21 are generally known in the prior art; they are described, for example, in EP 1 460 499 A1, DE 195 15 108 A1, EP 0 378 649 B1 and EP 0 858 016 B1 which were cited at the outset and whose contents are hereby expressly incorporated in the subject matter of the present application.

The apparatus 21 comprises a display unit 22 and an input unit 23. The input unit 23 comprises a conventional keyboard which is indicated at 24 and is intended to input numbers and letters to input masks which have yet to be described. The display unit 22 is a conventional screen 25 for displaying soft keys and screen masks, for example in the manner of Windows technology.

26 and 27 are keys with a permanently assigned function, for example EMERGENCY STOP or ON/OFF.

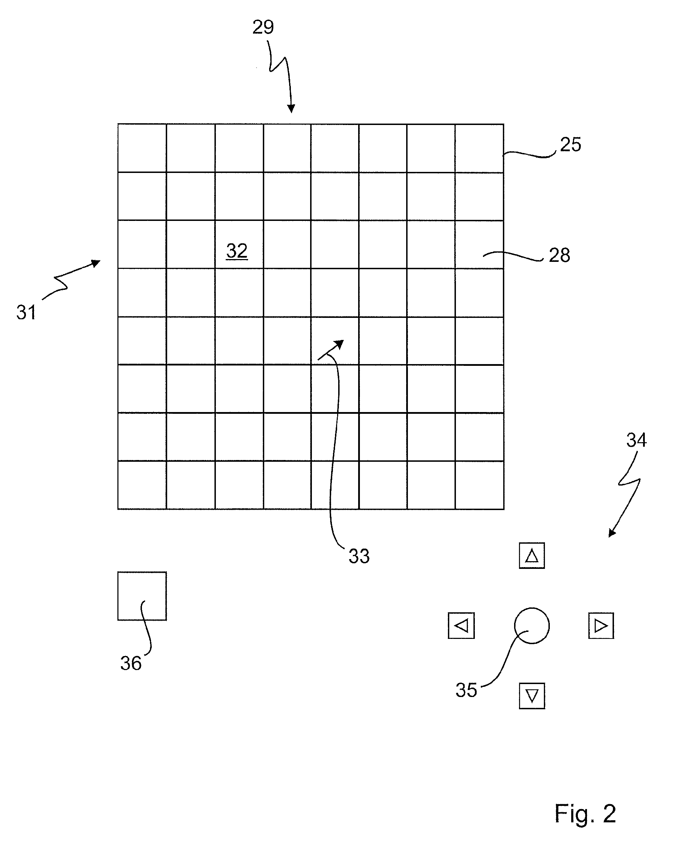

The screen 25 is illustrated in an enlarged and schematic manner in Fig. 2. In the embodiment according to Fig. 2, the screen 25 shows a start matrix 28 having a grid of fields 32 which are arranged in eight columns 29 and eight rows 31 and of which 64 are accordingly provided.

The fields 32 can also be arranged in the form of a circle or spiral, a higher number of fields being able to be displayed in a spiral-shaped grid.

A marker 33 which can be moved via a switch arrangement is provided for the purpose of selecting the fields 32. In this case, the switch arrangement is a keypad 34 with four arrow keys which can be used to move the marker 33 in the direction of the columns 29 and rows 31 in such a manner that the marker can be positioned on a field 32. In the example shown, the marker 33 is in the form of a pointer.

As soon as the marker 33 has been positioned on a field 32, the field is called up using an activation key 35 provided in the keypad 34, as a result of which a function assigned to the field 32 is triggered or a mask assigned to the field 32 is called up.

Instead of the keypad 34 with the activation key 35, a turn and push switch can also be used as the switch arrangement in order to move the marker over the fields 32 and to activate a field 32 which has been selected in this manner. This is particularly expedient if the fields 32 are arranged in a circle or in the form of a spiral.

Underneath the screen 23, Fig. 2 also shows a switch 36 which is used as a return key. The start matrix 28 is displayed on the screen 25 again each time by operating the return key 36.

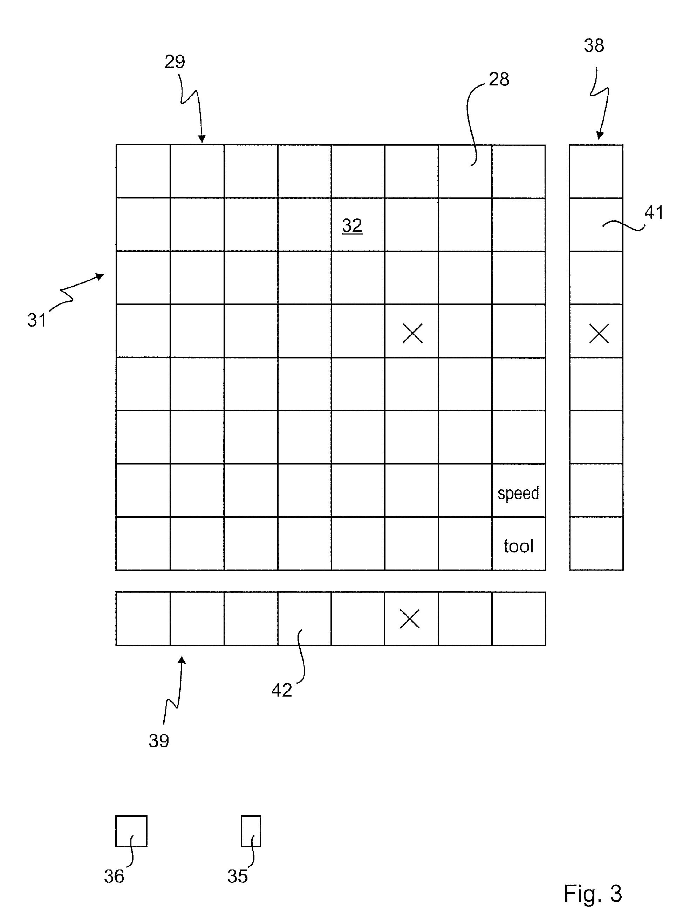

Whereas a field 32 is selected using the keypad 34 according to the embodiment in Fig. 2, two linear keypads 38 and 39 are provided according to the embodiment in Fig. 3. Eight keys 41 and 42 are respectively provided in each of the keypads 38 and 39.

The start matrix 28 with the total of 64 fields 32 is again illustrated on the screen.

Each one key 42 within keypad 39 is assigned to each column 29, each one key 41 in the keypad 38 being provided for each row 31.

The keypads 38 and 39 are arranged parallel to the columns 29 and rows 31 in such a manner that they are geometrically assigned to the fields 32 displayed in the start matrix 28 and this assignment can be visually easily detected or grasped.

The X field 32 in the start matrix 28 is thus selected by pushing a key 41 denoted X in the keypad 38 and a key 42 likewise denoted X in the keypad 39.

As soon as this field 32 has been selected, it can be activated by operating the activation key 35 illustrated beside the return key 36 in Fig. 3.

In Fig. 3, the two keypads 38 and 39 are arranged transversely with respect to one another in a manner adjoining the screen 25 in such a way that the assignment of the individual fields 32 to the keys 41 and 42 can be visually easily identified.

Apart from using the activation key 35, a field 32 can alternatively also be activated by pushing a key 41, 42 in each keypad 38 and 39, the simultaneous pushing of the two keys 41, 42 resulting in activation of the field 32 which has been defined in this manner.

The keypads 38 and 39 can be operated either using two hands or else using a single hand, in which case it is essentially important that the two keys 41 and 42 are pushed simultaneously, that is to say together.

According to another embodiment, a field 32 can also be activated by providing, in the apparatus 21, a timer function which activates a field 32 whenever the assigned row 31 and column 29 have been selected within a settable period of time using the keys 41 and 42. Single-handed operation is also possible in this manner when the keypads 38 and 39 are far apart. The order in which the keys 41 and 42 are operated is not important in this case; said keys must only have been pushed within the set period of time.

Different functions which can be carried out directly can now be assigned, on the one hand, to the individual fields 32 in the start matrix 28, with the result that, for example, a door is opened or closed, a rinsing operation is initiated, etc. by activating or triggering a particular key 32.

Other fields 32 can be assigned output masks in which operating parameters of the machine tool 10 are displayed, for example the temperature of the cooling lubricant, the program step currently being executed, the tool currently in use, the current moving speed etc.

Other fields 32 can be assigned input masks which are called up by activating the corresponding field 32. Data or programming instructions can be input to these input masks in a manner known per se, the input masks also being able to be used for maintenance and servicing work.

The assignment of the individual fields 32 to the functions and masks is freely programmable, fixed functions or masks being assigned to some fields 32, whereas other fields 32 can be assigned functions or masks in a user-defined manner.

Finally, it is also possible to dynamically assign functions or masks to some of the fields 32. The term "dynamic assignment" is understood here as meaning assignment by the software of the apparatus 21 which assigns those functions or masks which can be directly called up and are frequently used by the user currently operating the apparatus 21 to particular fields 32. This is a type of teach-in function; the start mask 28 thus reprograms itself according to the personal preferences of the user himself in such a manner that it can be used in a user-specific manner.

In order to now provide the user with the opportunity to use a start matrix 28, which has been programmed in this manner once, on different machine tools, a slot, which is depicted at 43 in Fig. 1, for a memory card schematically indicated at 44 is also assigned to the display unit 21. Particular programming for the start matrix 28 can be stored on this memory card 44, which programming can then be used by the respective user in different machine tools 10.

This is expedient, for example, when the user has to provide a plurality of machine tools 10 of the same type with identical or comparable programming in succession. However, this option of programming via a memory card 44 is particularly expedient for maintenance and service engineers since the respectively required programming of the start matrix 28 can then be used again and again at different locations and for different machine tools, the start matrix 28 dynamically adapting to different tasks or users, as has already been described above.

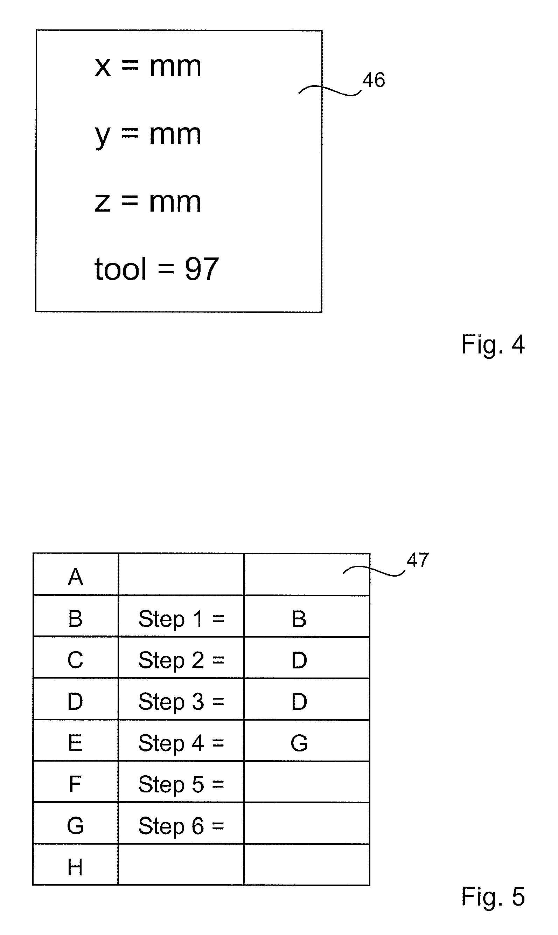

Only for the sake of completeness, Fig. 4 shows an output mask 46 which displays the tool used (tool = 97) and the position of the tool in the X, Y and Z directions.

By way of example, Fig. 5 also shows an input mask 47 which is used here to input the program steps Step1 to Step6. The available program instructions are denoted A, B, C, D, E, F, G and H in the left-hand column, for example. The program steps Step1 to Step6 are selected and the programming instructions A to H are assigned/input using the keyboard 24 from Fig. 2, for example.

In order to simplify the use of the apparatus 21, the individual fields 32 contain descriptions or symbols which symbolize or name the function or mask respectively allocated to the field 32. The fields 32 in column 8, rows 7 and 8 from Fig. 3 thus contain, for example, the designations "Speed" and "Tool", which means that the moving speeds and the tool respectively in use can be displayed using these fields.

## Claims

1. Apparatus on a machine tool (10) for machining workpieces (12), preferably for machining workpieces by removing material, the apparatus (21) being provided to control functions of the machine tool (10) and to program and/or test the machining of workpieces (12) and/or to test the machine tool (10) itself, the apparatus having at least one display unit (22) and at least one input unit (23), whereby masks (46, 47) for displaying and/or for inputting, via the input unit (23), machine and/or control parameters are displayable on the display unit (22),
**characterized in that** a start matrix (28) having a grid of fields (32), which fields (32) are stored in a geometrically addressable manner, can be displayed on the display unit (22), **in that** the input unit (23) which is separate from the display unit (22) can be used to select each field (32) via its geometrical position in the grid at which it is displayed on the display unit (22), and **in that** the assigned function can be immediately triggered or a mask (46, 47) can be immediately displayed on the display unit (22) by activating a field (32).

2. Apparatus according to Claim 1, **characterized in that** the fields (32) in the grid are arranged in rows (31) and columns (29), and **in that** each field (32) can be selected via the row (31) and the column (29) in which it is displayed on the display unit (22).

3. Apparatus according to Claim 2, **characterized in that** the input unit (23) has at least two keypads (38, 39), a first keypad (39) of which is intended to select a column (29) and a second keypad (38) of which is intended to select a row (31).

4. Apparatus according to Claim 3, **characterized in that** the first keypad (39) comprises a linear arrangement of keys (42) which are preferably arranged parallel to the displayed rows (31), the number of keys (42) in the first keypad (39) corresponding at least to the number of columns (29) which can be displayed on the display unit (22).

5. Apparatus according to Claim 3 or 4, **characterized in that** the second keypad (38) comprises a linear arrangement of keys (41) which are preferably arranged parallel to the displayed columns (29), the number of keys (41) in the second keypad (38) corresponding at least to the number of rows (31) which can be displayed on the display unit (22).

6. Apparatus according to Claims 4 and 5, **characterized in that** the display unit (22) comprises a screen (25) for displaying the start matrix (28), and **in that** the two keypads (38, 39) are arranged transversely with respect to one another in a manner adjoining the screen (25) in such a way that the keys (41, 42) are geometrically assigned to the fields (32) displayed in the start matrix (28).

7. Apparatus according to one of Claims 3 to 6, **characterized in that** it comprises a timer function which activates a field (32) when its column (29) and row (31) have been selected within a settable period of time.

8. Apparatus according to Claim 1 or 2, **characterized in that** a marker (33) can be displayed on the display unit (22), and **in that** the input unit (23) has at least one switch arrangement (34) which can be used to position the marker (33) on a field (32) to be selected.

9. Apparatus according to one of Claims 1 to 8, **characterized in that** the input unit (23) has at least one activation key (35) whose operation can activate a selected field (32).

10. Apparatus according to one of Claims 1 to 9, **characterized in that** the input unit (23) has at least one return key (36) whose operation can activate the start matrix (28).

11. Apparatus according to one of Claims 1 to 10, **characterized in that** it has a connection (43) for a storage medium (44) on which a start matrix (28) with assigned fields (32) and masks (46, 47) is stored.

12. Apparatus according to one of Claims 1 to 11, **characterized in that** fixed functions or masks (46, 47) are assigned to some of the fields (32).

13. Apparatus according to one of Claims 1 to 12, **characterized in that** functions or masks (46, 47) are assigned to some of the fields (32) in a user-defined manner.

14. Apparatus according to one of Claims 1 to 13, **characterized in that** functions or masks (46, 47) are dynamically assigned to some of the fields (32).

15. Apparatus according to one of Claims 1 to 14, **characterized in that** the function or mask (46, 47) assigned to the fields (32) is explained in at least some of the fields.

16. Machine tool for machining workpieces, preferably for machining workpieces by removing material, **characterized in that** it is provided with the apparatus according to one of Claims 1 to 15.
